# FASCICULE DE BREVET EUROPEEN

(11) **EP 1 989 664 B1**
(45) Date de publication et mention de la délivrance du brevet: **14.12.2011**
(21) Numéro de dépôt: 06831013.5
(22) Date de dépôt: 25.10.2006
(51) Int. Cl.: G06K 19/00

(54) **PROCEDE DE FABRICATION D'UNE PLURALITE DE CARTES A MICROCIRCUIT**
HERSTELLUNGSVERFAHREN VON CHIPKARTEN
METHOD FOR PRODUCING A NUMBER OF CHIP CARDS

(30) Priorité: 28.10.2005 FR 0511078
(43) Date de publication de la demande: 12.11.2008
(73) Titulaire: Oberthur Technologies, 92300 Levallois-Perret (FR)
(72) Inventeur: LAUNAY, François, F-35500 Vitre (FR); ENOUF, Guy, F-14190 Saint-Sylvain (FR)
(74) Mandataire: Quantin, Bruno Marie Henri
(86) Numéro de dépôt international: PCT/FR2006/002399
(87) Numéro de publication internationale: WO 2007/048927

(56) Documents cités:
- EP-A- 0 689 164
- WO-A-03/017743
- US-A1- 2003 008 118
- US-B1- 6 233 818

## Description

L'invention concerne un procédé de fabrication d'une pluralité de cartes à microcircuit.

Il peut s'agir par exemple de cartes mémoires telles que celles connues sous la désignation « SD-card », ou de cartes connues sous la désignation « smartmedia ». Il s'agit préférentiellement, mais non nécessairement d'une carte conforme à la norme ISO 7816.

On rappelle qu'il existe divers formats de cartes à microcircuit, parmi lesquelles on peut citer :
- le format ID-1 issu de la norme ISO7810, utilisé par exemple pour les cartes bancaires, que l'on dénomme parfois « grand format » compte tenu des dimensions des autres formats,
- le format ID-000 largement utilisé dans les cartes d'identification des abonnés des opérateurs de téléphonie mobile, couramment désigné sous l'appellation « plug-in SIM » (étant rappelé que SIM est l'abréviation de « Subscriber Identification Module », ce qui signifie un module d'identification d'abonné),
- le format Mini-UICC, plus récemment introduit et destiné, dans un certain nombre d'applications, à se substituer au format ID-000.

D'autres formats sont connus sous les désignations « multimedia », SD SIM (SD signifiant « Secure Digital », à savoir « numérique de sécurité »), mini-VISA, etc...

En fait, le champ d'application de telles cartes à microcircuit ne cesse de s'élargir et couvre la gestion et le transport de données, le débit-crédit, la téléphonie mobile, l'identification et le contrôle d'accès, avec des échanges avec l'extérieur qui peuvent être de types très divers (contacts électriques dans le cas de cartes dites « à contacts », connexion par radiofréquences dans le cas de cartes dites « contactless » ou dans le cas de cartes dites « duales » ou hybrides (avec à la fois des contacts électriques et une antenne), capteurs thermiques ou autres, etc.).

Les techniques de fabrication de telles cartes sont bien connues et comportent classiquement :
- 1 - Préparation d'au moins deux grandes feuilles (destinées à former plusieurs cartes, typiquement 48 cartes selon un réseau 6X8) ; on a en fait généralement plus de deux feuilles, par exemple lorsqu'on utilise un inlay central muni d'une antenne pour la fabrication des cartes duales ou sans contact,
- 2 - Impression d'une face de chacune des feuilles,
- 3 - Lamination à chaud des deux feuilles (et des éventuelles feuilles intermédiaires) en sorte de former une feuille de support ayant sensiblement l'épaisseur finale,
- 4 - Découpage de cette feuille de support pour former plusieurs supports (ou corps) individuels de cartes (typiquement 48),
- 5 - Création d'une cavité dans chacun des supports individuels de carte,
- 6 - Insertion et fixation d'un microcircuit (éventuellement monté au sein d'un module) dans la cavité,
- 7 - Personnalisation physique du support individuel de carte (typiquement par embossage, gravure laser, impression par jet d'encre d'informations liées au porteur), et
- 8 - Personnalisation du microcircuit.

En pratique les étapes 5 à 8 sont réalisées individuellement, carte par carte. En ce qui concerne l'étape 8, il y a des machines capables de personnaliser des cartes par lots, par exemple des lots de cartes engagées dans des fentes d'un barillet, mais la personnalisation au sein de ces lots se fait successivement sur les cartes du lot en cours de personnalisation.

Diverses variantes ont été envisagées. C'est ainsi que le document DE - 195 02 468 décrit un procédé de fabrication d'un réseau de supports individuels de cartes, faisant intervenir un moulage par injection des supports individuels de cartes (munies de leurs cavités) et de petits ponts de matière reliant ces derniers entre eux. Le document FR - 2 622 323 décrit de même un ensemble de supports de carte réalisé, avec leurs cavités respectives, par moulage par injection, impression de la surface de la grande feuille ainsi obtenue puis découpe de cette grande feuille en une pluralité de supports de cartes.

Le document FR - 2 778 002 enseigne de réaliser une « petite » carte au sein d'une carte de « grand » format, en sorte de fabriquer des petites cartes en utilisant des techniques de fabrication bien validées pour la fabrication des « grandes » cartes. Le document FR - 2 795 847 enseigne, quant à lui, de réaliser successivement plusieurs éléments (appelés inserts) dans un même support de grande carte.

En d'autres termes, il est classique de fabriquer des cartes de petit format, c'est-à-dire plus petit que celui des cartes de type ID-1, en passant par le format ID-1.

En ce qui concerne l'assemblage des microcircuits dans les cavités de leurs supports de cartes (opérations souvent désignées sous le terme d'encartage), diverses techniques sont connues, dont notamment :
- le moulage par transfert d'une résine autour du module électronique comportant le microcircuit) ; il s'agit d'une technologie similaire au moulage des boîtiers électroniques,
- l'assemblage de deux coques plastiques autour du module électronique,
- la fixation du module électronique (habituellement par un procédé de collage).

Toutes ces techniques ont l'inconvénient de procéder de manière individuelle aux opérations d'encartage et de test électrique après encartage, ce qui conduit à des cadences de fabrication qui peuvent se révéler insuffisantes eu égard aux besoins actuels.

Le document EP - 0 689 164 a, il est vrai, enseigné un procédé selon lequel, on imprime, sur une grande zone, une pluralité d'images et de marques de positionnement, mais c'est après découpe en petites unités qu'il y a une formation par usinage de cavités puis fixation de module, avant une séparation en cartes individuelles. Mais les cartes considérées sont de grand format.

Par ailleurs, il a été proposé, plus récemment, un procédé de production de cartes par lamination, selon lequel on prépare une bande porteuse munie d'un réseau de circuits électroniques et d'un ensemble de cartes porteuses bordées par des fentes ; mais cette bande est ensuite laminée entre des couches d'une manière telle que ces couches viennent en contact l'une avec l'autre à la faveur des fentes. De telles fentes ne servent donc pas à faciliter une séparation ultérieure.

L'invention a pour objet un procédé de fabrication de cartes à microcircuit qui permet d'augmenter les cadences de fabrication, notamment dans le cas des cartes de petit format, sans impliquer des machines de volume rédhibitoire ou des coûts excessifs.

L'invention propose à cet effet un procédé selon la revendication 1.

En fait, il est apparu que l'inconvénient des petites cartes par rapport aux cartes de plus grand format, qui réside notamment dans la complexité des opérations d'indexage et de positionnement des supports individuels de carte nécessaires pour la bonne réalisation des opérations individuelles d'encartage, pouvait être évité en procédant sur les feuilles de support, donc avant séparation complète des supports individuels, en profitant du fait que, en raison précisément de la petite taille des cartes à fabriquer, il était possible de mettre en oeuvre des outils à têtes multiples de volume modéré (au sein de machines de volume également modéré), et qu'il était donc réaliste de traiter simultanément une pluralité de supports individuels de cartes. En d'autres termes, l'invention réside notamment dans la prise de conscience de ce que la petite taille des petites cartes, dont on avait jusque là surtout perçu l'inconvénient lors leur fabrication, avait aussi des avantages en contrepartie.

On comprend que le fait d'accepter de procéder aux opérations d'encartage avant séparation complète (donc d'accepter que les opérations de séparation sont suffisamment fiables pour ne pas risquer de dégrader les cartes munies de leurs microcircuits (au sein de modules ou isolés) permet de simplifier les opérations d'indexage et de positionnement quelque soit la taille des cartes, compte tenu de ce qu'il n'est pas nécessaire de prévoir de cales ou autres pièces équivalentes entre les supports de carte, lesquels peuvent donc être très rapprochés lors des opérations d'encartage (ou de test électrique). On comprendra à cet égard que les commentaires qui précèdent expliquent que l'invention peut s'appliquer non seulement à la fabrication simultanée de cartes identiques, mais aussi à celle de cartes de tailles différentes.

La mise en oeuvre d'outils multi-têtes permet une augmentation des cadences de fabrication, tandis que leur usage sur la feuille support permet la conservation d'un volume modéré pour ces outils ainsi que pour la machine auxquels ces outils appartiennent. Enfin, le fait que l'indexage et le positionnement s'applique à la feuille support et non pas aux cartes au format final contribue à une minimisation des coûts puisque les systèmes d'indexage et de positionnement ne dépendent plus que des dimensions de la feuille de support (chaque constructeur adopte en pratique un très petit nombre de valeurs pour ces dimensions) indépendamment des dimensions des cartes finales.

Selon des caractéristiques avantageuses de l'invention, éventuellement combinées :
* l'étape de traitement réalisée au moins en partie au moyen d'un outil multi-têtes est une étape d'encartage,
* l'outil multi-tête est utilisé pour une opération de mise en place simultanée de modules électroniques comportant un microcircuit dans la pluralité de cavités de la feuille de support,
* l'étape de préparation de la feuille comporte une opération de formation de rebords à la périphérie des cavités,
* l'outil multi-tête est utilisé pour une opération de formation par emboutissage de pistes et de contacts dans la cavité,
* l'opération de formation par emboutissage de pistes et de contacts est effectuée au moyen de têtes d'emboutissage agissant sur des bandes de matériau conducteur temporairement disposées au dessus d'une série d'au moins deux cavités,
* l'outil multi-tête est utilisé pour une opération de mise en place de microcircuits dans une pluralité de cavités,
* l'opération de préparation de la feuille de support comporte une opération de formation de flancs inclinés autour du fond des cavités,
* l'outil multi-tête est utilisé pour une opération de dépôt d'une dose de résine dans chacune des cavités,
* l'outil multi-tête est utilisé pour une opération de test électrique des microcircuits après mise en place et fixation dans les cavités,
* l'outil multi-tête est utilisé pour une opération de personnalisation des cartes,
* l'outil multi-téte comporte une pluralité de têtes d'impression laser,
* l'outil multi-tête comporte une pluralité de têtes d'impression à jet d'encre,
* l'outil multi-tête comporte une pluralité de têtes de poinçonnement,
* toutes les têtes de l'outil effectuent la même opération, en même temps,
* les têtes de l'outil multi-tête ont des écartements variables correspondant à des formats de carte différents.

Des objets, caractéristiques et avantages de l'invention ressortent de la description qui suit, donnée à titre d'exemple illustratif non limitatif, en regard des dessins annexés sur lesquels:
- la figure 1 est une vue de dessus d'une feuille support dans laquelle ont été ménagées des cavités destinées à recevoir un module électronique comportant un microcircuit, en vue de former des cartes à microcircuit,
- la figure 2 est une vue partielle en coupe de cette feuille à l'endroit d'une des cavités,
- la figure 3 est une vue en perspective de la feuille support perdant une étape d'encartage accomplie simultanément sur plusieurs cavités, au moyen d'un outil à têtes multiples,
- la figure 4 est une vue partielle en coupe de cette feuille à l'endroit d'une cavité dans laquelle un module a été mis en place,
- la figure 5 est une vue de la feuille des figures 1 et 3 après séparation des cartes,
- la figure 6 est une vue analogue à celle de la figure 1, montrant une autre feuille de support munie de cavités d'une autre géométrie,
- la figure 7 est une vue en perspective de la feuille support de la figure 6 pendant une opération, faisant partie d'une étape d'encartage, accomplie simultanément sur plusieurs cavités, au moyen d'un autre outil à têtes multiples,
- la figure 8 est une vue en coupe d'une cavité de la feuille de la figure 7,
- la figure 9 est une vue en perspective par-dessous d'une tête de l'outil de la figure 7,
- la figure 10 est une vue en perspective de la cavité de la figure 8 après l'opération réalisée par la tête de la figure 9,
- la figure 11 est une vue en perspective de la même feuille de support pendant une opération ultérieure faisant partie de l'étape d'encartage, accomplie simultanément sur plusieurs cavités, au moyen d'encore un autre outil multi-têtes,
- la figure 12 est une vue en coupe d'une cavité après réalisation de cette autre opération de l'étape d'encartage,
- la figure 13 est une vue de la feuille de la figure 11 après séparation des cartes à microcircuit,
- la figure 14 est une vue d'encore une autre feuille de support, présentant des fentes entre les emplacements des futures cartes à microcircuit,
- la figure 15 est une vue d'encore une autre feuille de support, présentant des entailles entre les emplacements des futures cartes à microcircuit,
- la figure 16 en est une vue en coupe et
- la figure 17 est un schéma de principe d'une machine.

Une carte selon l'invention comporte un corps réalisé dans une matière pouvant être moulée, préférentiellement une matière plastique de tout type connu approprié.

Cette carte peut être une carte mémoire telle qu'une carte SD Card, ou une carte Smartmedia. Il s'agit préférentiellement d'une carte conforme à la norme ISO7816, c'est-à-dire une carte de type ID-000.

L'épaisseur de la carte est quelconque. Il peut s'agir d'une carte d'environ 0.76 mm d'épaisseur, comme c'est le cas pour une carte à puce, ou plus épaisse. L'épaisseur est sans importance pour l'invention.

En ce qui concerne la largeur et la longueur de la carte, elles sont préférentiellement inférieures à celles définies par le format ID-1, définies selon la norme ISO7816. Préférentiellement, elles sont égales, voire inférieures, à celle définies par le format ID-000. Il peut s'agir par exemple d'une carte au format Mini-UICC. En effet, l'invention est particulièrement intéressante dans le cas des cartes de petite taille (ID-000, mini-UICC).

De manière connue en soi, la carte comporte une cavité dans lequel est inséré le microcircuit ; ce microcircuit peut être fixé à un circuit imprimé pour former un module avant d'être inséré dans la cavité et fixé au support de carte. En variante, le microcircuit est fixé directement dans le fond de la cavité.

Une carte selon l'invention peut, indifféremment, comporter des contacts électriques extérieurs (cartes avec contacts, voire cartes hybrides ou duales), ou non (cartes dites « sans contact » ou contactless).

Le microcircuit est préférentiellement un microcontrôleur apte à - interagir avec un lecteur selon la norme ISO7816. En variante, il peut s'agir d'une mémoire flash, d'un capteur d'empreinte, d'un écran, d'un capteur solaire, etc... Il convient de noter que la carte ne comporte pas nécessairement de port d'entrée sortie de type à contacts ou par antenne ; c'est ainsi que la carte peut ne comporter, comme interface avec l'extérieur, qu'un capteur, par exemple d'empreinte digitales, et un écran.

Lorsqu'on intègre un module dans la cavité, ce module peut bien sûr comporter plusieurs microcircuits.

Dans un exemple de réalisation de l'invention, la fabrication de telles cartes à microcircuit comporte:
- une étape de préparation d'une feuille de support en une ou plusieurs matières plastiques, comportant une pluralité d'emplacements de carte destinés chacun à former un support de carte,
- une étape de traitement de la dite feuille de plastique, en utilisant un outil multi-tête, chaque tête réalisant ladite étape de traitement d'un d'emplacement différent de ladite carte, sensiblement en parallèle du traitement réalisé par au moins une autre tête,
- une étape ultérieure de séparation des emplacements.

On comprend que ce procédé a pour avantage que le traitement n'est plus réalisé en séquentiel, mais en parallèle. On augmente ainsi la cadence des machines d'encartage et de personnalisation en terme de nombre de cartes traitées. En outre, on met ainsi en oeuvre une machine pouvant s'adapter à différentes tailles et formes de carte, car il suffit de changer la matrice d'outil multi-tête pour s'adapter à une nouvelle forme de carte.

De manière préférée, le procédé comporte une étape de moulage pour former ladite feuille de plastique. La mise en oeuvre d'un tel moulage (en pratique par injection) permet d'éviter ou de faciliter un certain nombre de traitements, notamment le creusement de la cavité ou un prédécoupage des supports de cartes.

En effet, l'étape de moulage permet de former directement les cavités : il n'y a plus besoin de prévoir une étape d'enlèvement de matière.

Par ailleurs, le moulage permet de prévoir des fentes sur une partie de la périphérie des emplacements, ou des entailles dans l'épaisseur le long de cette périphérie, en sorte d'assurer un prédécoupage des futurs supports de carte. Un intérêt de prévoir la formation de fentes ou d'entailles au moment du moulage est que la séparation finale peut se faire facilement, éventuellement de façon manuelle.

Toute autre technique de préparation de la feuille de support peut toutefois être utilisée. C'est ainsi qu'on peut réaliser une telle feuille par lamination de diverses feuilles ayant des fonctions différentes, puis par creusement de cavités dans chacun des emplacements.

De manière avantageuse, lesdites cartes ont une longueur et une largeur sensiblement inférieures à celles d'une carte au format ID-1.

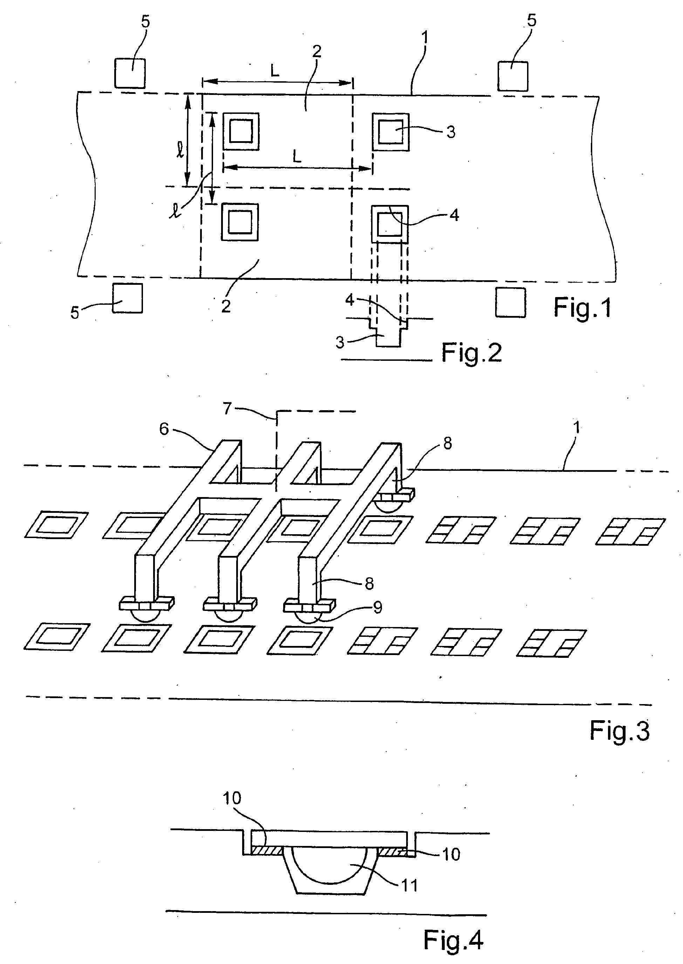

La figure 1 représente une partie d'une feuille de support 1 dans laquelle une pluralité d'emplacements de cartes 2 ont été identifiés ; il s'agit ici d'un réseau de deux lignes côte à côte ; on comprend aisément qu'il peut s'agir, en variante, d'une bande de grande longueur. Dans chacun des emplacements est située une cavité 3 (réalisée lors du moulage) qui présente, dans l'exemple de la figure 2, un rebord 4 près de la surface supérieure. Chaque cavité est séparée des cavités voisines par un intervalle au moins égal, de préférence supérieur, aux dimensions des emplacements 2. Ainsi, dans l'exemple représenté, les emplacements sont exactement adjacents de sorte que l'intervalle entre les cavités est égal à la longueur L, ou à la largeur l, des emplacements.

Les points d'injection de la matière de moulage sont en pratique situés sur la tranche de la feuille pour éviter la présence de défauts visuels à la surface de cette feuille et donc à la surface des futures cartes (voir le document FR - 2 778 002 dans le cas de cartes individuelles). Toutefois, dans une variante non représentée, si l'écart entre les cavités est supérieur aux dimensions des emplacements, ce qui signifie que les emplacements ne sont pas adjacents, les points d'injection sont avantageusement disposés sur une face de la feuille, entre ces emplacements.

La feuille 1 est manipulée dans son ensemble par des éléments d'indexage et de positionnement schématisés dans leur ensemble par des blocs 5, ce qui permet la mise en oeuvre d'une machine et d'outils compacts. C'est ainsi que la figure 3 représente un outil multi-tête 6 adapté à réaliser une étape d'encartage en simultané, sur un nombre significatif d'emplacements de cartes, ici au nombre de 6. En variante, cet outil est adapté à participer au test électrique (pour vérifier la bonne connexion du microcircuit après encartage).

On comprend que, le pas entre les cavités, selon les deux dimensions (longitudinale et transversale, étant constant (puisqu'ils sont définis par l'identification des emplacements de la feuille (indéformable selon ces dimensions)), la distance séparant les têtes peut être également constant, ce qui contribue à la compacité de l'outil multi-têtes, et donc à sa simplicité. Cette compacité et cette simplicité de l'outil sont accrues par la faible valeur de ce pas. Ceci, combiné avec la simplicité et la compacité, notamment, du système d'indexage et de positionnement de la feuille contribue à minimiser le coût de l'ensemble de la machine de mise en oeuvre du procédé.

Plus précisément, l'outil 6 est entraîné en mouvement par un bras manipulateur schématisé sous la référence 7 ayant au moins un degré de mouvement en translation vertical.

Cet outil comporte un ensemble de doigts 8 adaptés chacun à saisir, par exemple par aspiration, un module 9 préalablement assemblé de toute manière connue appropriée et stocké temporairement dans une zone d'attente non représentée, le bras manipulateur ayant la possibilité de circuler entre cette zone d'attente et la zone de traitement où se trouve la feuille1. En pratique ces modules électroniques sont réalisés au sein d'une bande et sont découpés peu avant l'encartage.

On voit, sur la figure 3, que les cavités situées à droite de l'outil 6 comportent déjà un module tandis que les cavités de gauche sont en attente d'un encartage. Sous l'outil 6 se trouvent six cavités sur le point de recevoir, simultanément, des modules portés par les doigts de cet outil.

Ce n'est que pour des raisons de clarté de cette figure 3 que les cavités sont plus rapprochées qu'à la figure 2 ; cela permet de représenter aussi bien des cavités remplies, que des cavités en cours de traitement et des cavités devant être traitées lors d'un cycle ultérieur de mise en oeuvre de l'outil représenté.

On peut noter à l'examen de cette figure 3 que ces modules 9 sont du type à contacts externes portés par celui-ci, de sorte qu'il n'y a pas à prévoir de connexion de ces modules à d'autres composants de la carte.

La figure 4 montre un tel module après encartage dans une cavité: ce module est fixé à la cavité au moyen d'un adhésif 10 situé entre la périphérie du module et le rebord 4 de la cavité. Cet adhésif 10 est ici un adhésif thermofusible avantageusement déposé préalablement sur la bande dans laquelle les modules ont été prélevés ; en variante cet adhésif peut être de tout autre type approprié ; il peut aussi s'agir d'une colle, par exemple cyanoacrylate déposée par un éventuel autre outil multi-tête sur le rebord des cavités.

De manière connue, ce module comporte le microcircuit monté sur sa face tournée vers le fond de la cavité, au sein d'une masse de résine protectrice 11. En variante, on peut aussi procéder en déposant une goutte de résine dans la cavité avant d'y monter le module, le microcircuit étant éventuellement monté sur le module sans encore être enrobé, l'enrobage se réalisant lors de l'introduction forcée de ce microcircuit dans la goutte de résine, en conséquence de quoi le microcircuit est fixé au fond de la cavité, ce qui contribue à garantir qu'une tentative d'arrachement du module hors de la cavité implique une dégradation significative du module (voir les documents EP - 0 519 564 ou FR - 2 793 330).

La mise en oeuvre d'autres outils multi-têtes permettent, si nécessaire, d'autres opérations, par exemple un test électrique pour vérifier l'intégrité du module après son encartage.

C'est ensuite que les emplacements identifiés au sein de la feuille sont dissociés pour donner des cartes opérationnelles individuelles

L'encartage et le test simultané de plusieurs cartes à la fois s'est révélé pouvoir aboutir à des gains de coût d'encartage de l'ordre de 40% par rapport aux techniques actuelles de traitement individuel et séquentiel.

En effet, la mise en oeuvre, selon l'invention, d'un moulage par injection des feuilles de support, permet la mise en oeuvre d'équipements d'encartage de très hautes cadences (pouvant atteindre 5 000, voire 10 000 pièces à l'heure).

On appréciera que l'invention permette d'assembler des cartes de divers formats, sans nécessiter de modifications profondes de la machine mise en oeuvre, notamment en ce qui concerne les circuits de circulation des produits d'encartage. Cela permet de traiter des cartes différentes avec une même machine, de sorte qu'on peut dire que la technologie de l'invention est une technologie multi-standard.

En effet, lorsque l'on traite séquentiellement et individuellement des cartes d'un format donné, le système d'indexage des cartes (de positionnement de chaque carte par rapport aux différents outils à tête unique, voire de déplacement) dépend étroitement de la forme de ces cartes. Il en découle que lorsqu'on change la taille ou la forme des cartes à fabriquer, il faut adapter tous les équipements de la machine (à supposer que cela soit possible) ; l'ampleur de ce que cela peut impliquer est une des raisons pour lesquelles on passe couramment par le format ID-1 pour la réalisation de cartes plus petites.

Par contre, l'invention facilite le changement de format ou de taille puisque, si le format des feuilles ne change pas (ou peu), on peut se contenter de changer la géométrie des outils multi-têtes, sans changer de machine. Il suffit en effet de prévoir à cet effet un outil dont les têtes sont à distance variable.

Il peut être ajouté que le fait que le moulage intègre la formation d'entailles ou de fentes entre les emplacements permet que la séparation finale des emplacements, après encartage puisse se faire de manière simple, éventuellement indépendante du format ou de la forme de ces emplacements, par exemple simplement manuelle; il n'est donc pas nécessaire de prévoir un équipement de découpe conçu en fonction de cette forme ou de cette taille.

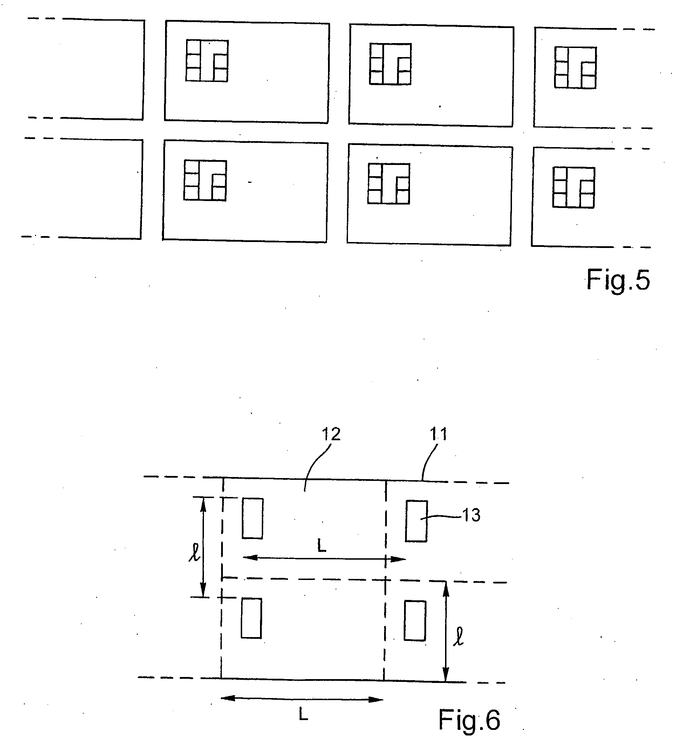

La figure 5 représente une pluralité de cartes à microcircuit obtenues après séparation des emplacements prévus sur la feuille 1. Cette séparation peut être réalisée au moyen d'une matrice emporte-pièce. Ici encore, la découpe de nombreuses petites cartes au sein de la feuille permet d'obtenir de très hautes cadences (de l'ordre précité d'environ 10 000 pièces à l'heure).

Bien entendu, cette étape de séparation peut intervenir à n'importe quel moment après l'encartage. C'est ainsi que, ainsi que cela a été indiqué ci-dessus, il peut y avoir une étape de test simultané des modules encartés avant de procéder avant cette étape de séparation. En variante, cette opération de test est effectuée sur chaque carte individuelle après une telle étape de séparation. Cette étape de séparation peut également être effectuée après les opérations de personnalisation électrique et/ou graphique des cartes, c'est-à-dire que cette étape de séparation peut intervenir tout à la fin de la fabrication des cartes. On comprend aisément en effet, qu'on peut , après avoir utilisé un outil multi-tête pour l'encartage, utiliser un outil multi-tête pour le test électrique des modules encartés, et un outil multi-tête pour la personnalisation des cartes. On appréciera que l'invention permet ainsi d'éviter la mise en oeuvre de systèmes complexes tels que des barillets recevant des lots de cartes déjà séparées des autres cartes, ou des systèmes encombrants pour ces opérations suivant l'encartage proprement dit.

La personnalisation graphique peut, selon le choix de l'opérateur, être effectué au moyen d'une pluralité de têtes laser ou de têtes à jet d'encre, voire au moyen d'une pluralité de poinçons, ces têtes ou poinçons étant portés par un même outil et animés d'un même mouvement descendant.

Quant à la personnalisation, elle peut être réalisée par une pluralité de têtes capables de communiquer avec les microcircuits d'une pluralité de futures cartes, au moyen des plots de connexion externe prévus sur le module, voire sur la surface de la carte auprès de sa cavité (voir ci-dessous).

En variante, cette personnalisation se fait, simultanément au moyen d'une pluralité de têtes, par échange électromagnétique avec une antenne prévue au sein de chaque carte.

Les figures 6 à 13 décrivent une autre étape d'encartage, dont plusieurs opérations élémentaires sont réalisées au moyen d'outils multi-têtes appropriés. Certains détails sont inspirés des enseignements des documents FR - 2 777 675 ou EP - 0 908 844.

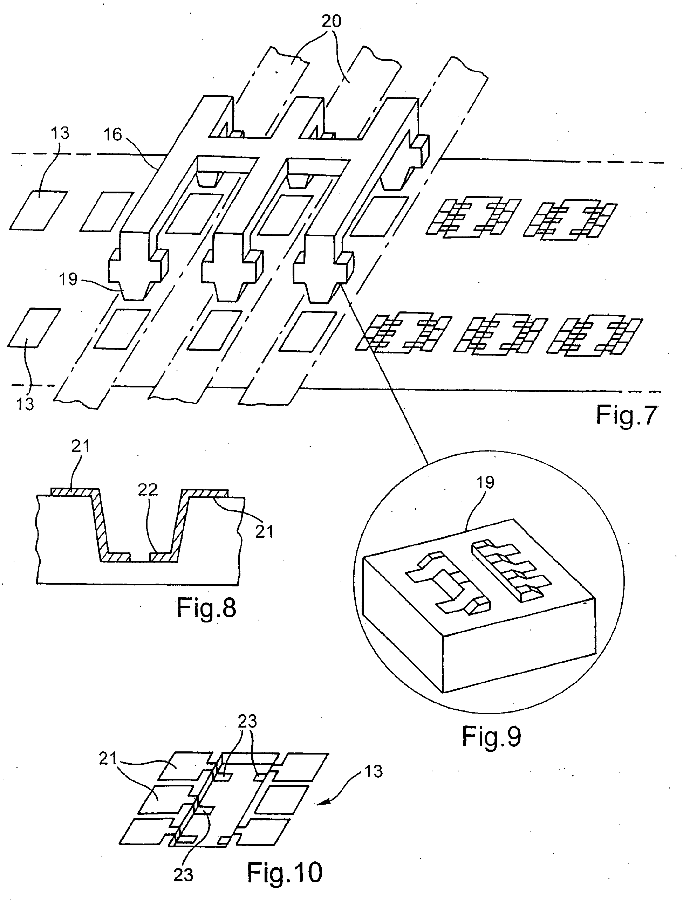

La figure 6 montre ainsi une feuille de support 11 obtenue par moulage par injection et présentant de multiples cavités 13 résultant de cette étape de moulage, au sein d'une pluralité d'emplacements 12 identifiés et dont les frontières sont schématisés par des tiretés. A la différence des cavités de la figure 1, ces cavités 13 ne présentent pas de rebords en retrait, mais des flancs 14 légèrement inclinés (d'au plus 30° à 45°); ainsi que cela ressort de la figure 8. Ces cavités sont ici rectangulaires.

La figure 7 représente cette feuille 11 faisant l'objet d'une opération d'encartage accomplie par un outil multi-têtes 16 capable d'effectuer une opération élémentaire d'embossage faisant partie d'une étape de traitement, ici d'encartage.

Les têtes d'embossage 19 montées aux extrémités des doigts 18 de l'outil, dont l'une est représentée à la figure 9, viennent chacune découper une portion d'une bande de cuivre 20 déroulée transversalement au dessus des cavités, et emboutir le motif ainsi découpé dans le fond, sur les côtés et sur le pourtour extérieur des cavités, de façon à créer (voir les figures 8 et 10) des contacts externes 21 (sur le pourtour de la cavité) et des contacts internes 22 (sur le fond de la cavité), ces contacts externes et internes étant connectés par des pistes s'étendant sur des flancs de cette cavité.

L'adhérence entre le motif de cuivre découpé et la matière constitutive du support de carte est assurée soit par une colle pré-enduite sur la bande de cuivre, soit en conférant à la surface inférieure de la bande de cuivre une forte rugosité autorisant une accroche mécanique entre cette bande et la matière du support de carte.

Bien entendu, la bande de cuivre peut être remplacée par toute autre bande réalisée en matériau conducteur. On peut en outre prévoir que, lors d'une étape préalable, un outil multi-tête a déposé un motif dans chaque cavité, ce motif étant ensuite assemblé à la surface de la cavité comme indiqué à la figure 7.

Cette opération élémentaire d'encartage peut être, comme celle décrite à propos des figures 1 à 5, être accomplie à de très hautes fréquences, puisqu'elle met en oeuvre des équipements d'embossage qui sont simples et compacts.

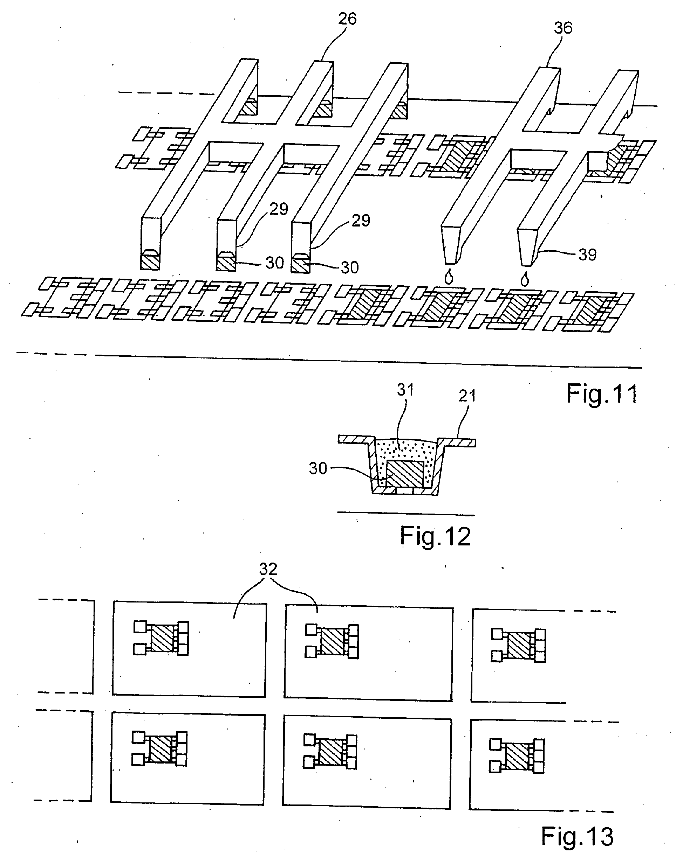

La figure 11 montre l'exécution d'autres opérations élémentaires faisant partie de l'étape d'encartage commencée à la figure 7. Ces étapes élémentaires correspondent au montage dit « flip-chip », c'est-à-dire que des microcircuits sont montés « à l'envers ».

Un outil multi-tête 26 (à gauche) comporte une pluralité de têtes de manipulation 29 adaptées à déposer des microcircuits 30 dans les cavités. Le positionnement du microcircuit et celui des contacts internes 22 sont tels que chaque microcircuit est ainsi connecté aux contacts externes associés. Une opération subséquente est effectuée par un second outil multi-tête 36 d'enrobage dont chaque tête 39 est adaptée à remplir chacune des cavités dans lesquelles des motifs conducteurs ont été embossés et où un microcircuit a été déposé. Ce remplissage ou cet enrobage peut être réalisé avec une colle, ou avec une résine d'enrobage 31 (voir la figure 12) adaptée à fixer efficacement le microcircuit au fond et aux flancs de la cavité considérée.

De manière avantageuse, une opération d'encollage (dépôt de colle) est réalisée avant de déposer le microcircuit.

On comprend aisément que cet outil 36 peut, en variante, être utilisé pour déposer de la résine au fond des cavités avant l'accomplissement de l'opération décrite à la figure 3.

Ces opérations élémentaires, ici toutes réalisées de façon simultanée sur une pluralité de cavités au moyen d'outils multi-tête, sont suivies par une étape de séparation, pouvant être réalisée de la même manière que cela a été décrit à propos de la figure 5 ; on obtient ainsi des cartes individuelles 32.

On appréciera que cette variante d'étape d'encartage permette de ne pas avoir à prévoir de circuit imprimé formant, avec le microcircuit, un module, ce qui peut conduire à une réduction sensible de coût par rapport à l'étape d'encartage des figures 1 à 5.

En variante non représentée, on peut combiner les opérations décrites dans les figures 3 et 7, pour effectuer le montage de modules destinés à être connectés à une antenne préalablement intégrée dans la feuille, par moulage par injection ou par toute autre technique, en sorte de former une carte sans contact ou hybride.

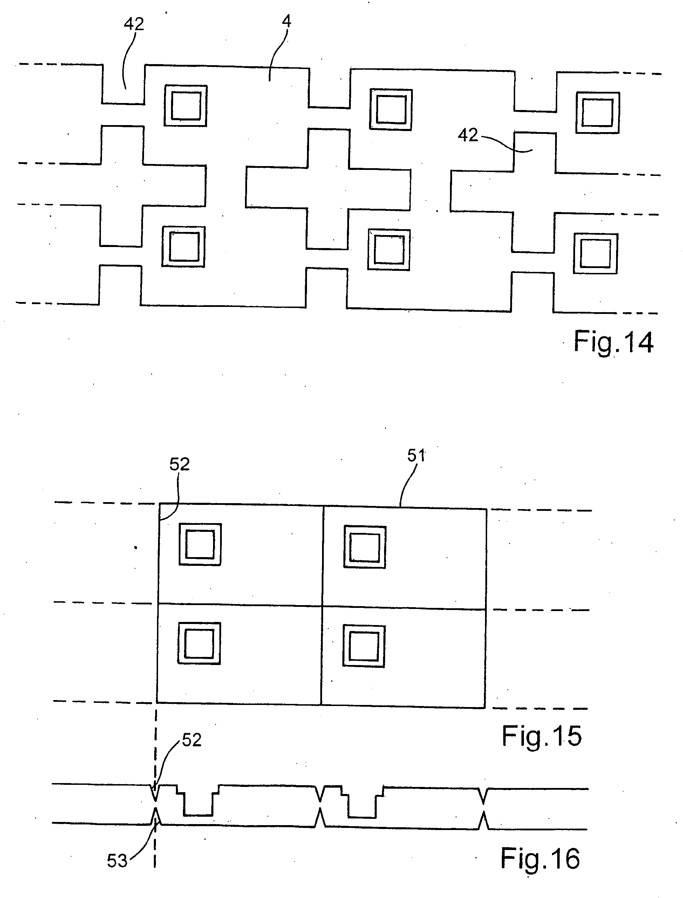

La figure 14 représente une autre feuille de support 41 qui se distingue de celles des figures précédentes par le fait que, au lieu d'être adjacents, les emplacements correspondant aux futures cartes sont disjoints avec un écart déterminé par des fentes 42 qui ne laissent subsister que quelques ponts 43 permettant de conserver les positions respectives entre les emplacements. On comprend aisément que la séparation finale des cartes nécessitera simplement la rupture des ponts, ce qui n'implique pas la mise en oeuvre d'un équipement compliqué.

Les figures 15 et 16 représente encore une autre feuille de support 51 qui se distingue de celles des figures 1 à 13 par le fait que, quoiqu'adjacents, les emplacements destinés à former les futures cartes sont déterminés par des frontières mécaniquement affaiblies, ici au moyen de deux entailles 52 et 53 situées dans l'épaisseur du support de carte. Comme dans le cas de la figure 14, la séparation finale des cartes est ainsi simplifiée et n'implique pas la mise en oeuvre d'un outillage puissant.

Bien entendu ces entailles et fentes peuvent être combinées.

En outre, elles peuvent être prévues quelque soit le procédé de préparation des feuilles de support, par exemple au moyen d'un enlèvement de matière ou d'une entaillage.

En fait, dans les exemples des figures 14 à 16, la séparation des cartes peut éventuellement être faite à la main.

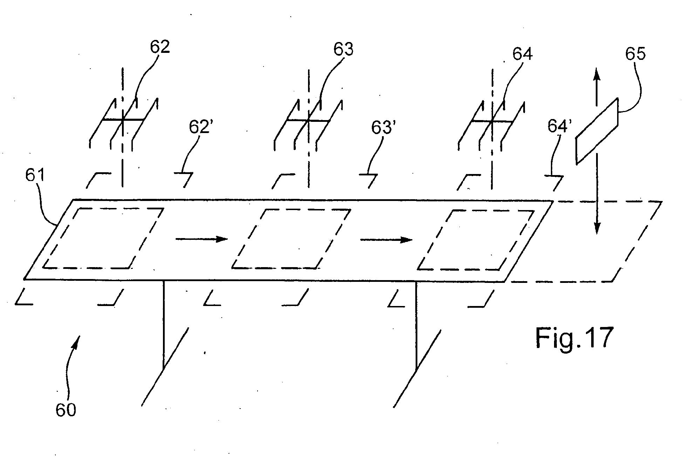

La figure 17 est un schéma de principe représentant un exemple de machine.

Cette machine représentée sous la référence 60 comporte un plan de travail fixe 61 comportant trois zones de traitement 62, 63 et 64, par exemple adaptées aux opérations élémentaires décrites par les figures 7 et 11, chacune effectuée au moyen d'un outil multi-tête tel que les outils 16, 26 ou 36. Chacune des zones de traitement est munie d'un système d'indexage et de positionnement d'une feuille (pouvant avoir la taille de la zone de traitement), schématisé sous la référence 62', 63', ou 64'.

Toutefois, ces outils peuvent servir à d'autres opérations faisant partie, ou non, de l'étape d'encartage. C'est ainsi que, comme indiqué ci-dessus, un tel outil multi-tête peut être conçu (selon le même principe que les outils précédemment décrits) pour effectuer des opérations de test électrique, voire de personnalisation.

On appréciera que ces opérations ne se limitent pas à une simple impression graphique (qui n'implique pas d'outil multi-tête).

Par ailleurs, il n'est pas nécessaire que les différents outils aient les mêmes nombres de têtes. C'est ainsi qu'on peut prévoir, par exemple, qu'il y a d'autant plus de têtes sur un outil que l'opération à réaliser est simple (ou que le volume élémentaire des têtes est faible, etc.).

Toutefois, on peut prévoir que les outils multi-têtes soient de même structure, de manière à ce qu'il suffise de changer les têtes pour qu'un outil donné change de fonction.

Il y a avantageusement une station de découpe 65 après les opérations de traitement réalisées par les outils multi-têtes, éventuellement munie elle-même d'un outil multi-tête. Toutefois, l'outil peut être simplement une lame de découpe animée d'un mouvement ascendant.

Le passage d'une zone à l'autre est assuré par un quelconque moyen de transport de tout type connu approprié. En variante, le plan de travail se déplace en sorte d'amener une feuille donnée successivement sous chaque outil multi-tête. On peut encore prévoir que ce soit les outils qui se déplacent par rapport au plan de travail (celui-ci peut être continu, ou non, etc.).

On comprend aisément que l'invention permet de réaliser rapidement des cartes de petit format, avec une cadence qui est d'autant plus rapide que ce format est petit.

Il est rappelé que l'invention se généralise au cas de feuilles de support réalisées par une autre technique que le moulage, telle que la lamination de feuilles complémentaires, de manière connue en soi.

Par ailleurs, il a été décrit précédemment que toutes les têtes de l'outil considéré effectuent la même opération en plusieurs endroits, de manière tout à fait simultanée. Toutefois, l'invention s'applique également au cas où une partie seulement des têtes effectuent une même opération de manière simultanée, en prévoyant par exemple un décalage entre les moments où, dans l'exemple des feuilles comportant deux cartes côte à côte, l'outil teste électriquement les paires successives de microcircuits après encartage, par exemple pour ne pas avoir à consommer trop de courant à la fois.

L'invention s'applique aussi au cas où un outil peut comporter des têtes effectuant une première opération et d'autres têtes effectuant une seconde opération complétant la première, par exemple pour le dépôt d'une goutte de colle immédiatement avant mise en place d'un module ou d'un microcircuit.

## Revendications

1. Procédé de fabrication d'une pluralité de cartes à microcircuit de longueur et de largeur égales ou inférieures à celles définies par le format ID-000 comportant une étape de préparation d'une feuille de support (1, 11, 51, 61) comportant une pluralité d'emplacements (2) dont chacun est destiné à constituer un support de carte et est muni d'une cavité (3, 13) adaptée à recevoir un microcircuit (9, 30), cette étape de préparation de la feuille de support comportant une étape de moulage par injection de cette feuille avec lesdites cavités (3) lors de laquelle sont formées des fentes (42) entre les emplacements en laissant subsister des ponts de connexion mécanique ou des entailles (52, 53) dans l'épaisseur de la feuille, une étape de traitement de ladite feuille de support réalisée au moins en partie au moyen d'un outil à têtes multiples (6, 16, 26, 36) à indexage et positionnement (5) appliqué à ladite feuille de support, l'une au moins des têtes de cet outil étant adaptée à effectuer une opération sur un emplacement de la feuille sensiblement en même temps qu'une autre tête de cet outil effectue une même opération sur un autre emplacement de cette feuille, et une étape de séparation des emplacements postérieure à cette étape de traitement qui est facilitée par la formation des entailles ou des fentes réalisées lors de l'étape du moulage.

2. Procédé selon la revendication 1, **caractérisé en ce que** l'étape de traitement réalisée au moins en partie au moyen d'un outil multi-têtes est une étape d'encartage.

3. Procédé selon la revendication 2, **caractérisé en ce que** l'outil multi-tête (16) est utilisé pour une opération de formation par emboutissage de pistes et de contacts (21, 22) dans la cavité (13), effectuée au moyen de têtes d'emboutissage (19) agissant sur des bandes de matériau conducteur (20) temporairement disposées au dessus d'une série d'au moins deux cavités.

4. Procédé selon l'une quelconque des revendications 1 à 3, **caractérisé en ce que** l'outil multi-têtes est utilisé pour une opération de mise en place de microcircuits dans une pluralité de cavités.

5. Procédé selon l'une quelconque des revendications 1 à 4, **caractérisé en ce que** l'outil multi-tête est utilisé pour une opération de dépôt d'une dose de résine dans chacune des cavités.

6. Procédé selon l'une quelconque des revendications 1 à 5, **caractérisé en ce que** l'outil multi-tête est utilisé pour une opération de test électrique des microcircuits après mise en place et fixation dans les cavités.

7. Procédé selon l'une quelconque des revendications 1 à 6, **caractérisé en ce que** l'outil multi-tête est utilisé pour une opération de personnalisation des cartes.

8. Procédé selon la revendication 7, **caractérisé en ce que** l'outil multi-tête comporte une pluralité de têtes d'impression.

9. Procédé selon la revendication 7, **caractérisé en ce que** l'outil multi-tête comporte une pluralité de têtes de poinçonnement.

10. Procédé selon l'une quelconque des revendications 1 à 9, **caractérisé en ce que** toutes les têtes de l'outil effectuent la même opération, en même temps.

11. Procédé selon l'une quelconque des revendications 1 à 10, **caractérisé en ce que** les têtes de l'outil multi-tête ont des écartements variables correspondant à des formats de carte différents.

## Claims

1. Method for producing a plurality of chip cards having a length and a midth equal to or less than those defined by the ID-000 format, which includes a step of preparation of a support film (1, 11, 51, 61) including a plurality of locations (2) each of which is intended to constitute a card support and is provided with a cavity (3, 13) adapted to receive a microcircuit (9, 30), this support film preparation step including a step of injection moulding the film with said cavities (3) during which there are formed slots (42) between the locations leaving mechanical connection bridges or scorelines (52, 53) in the thickness of the film, a step of processing said support film carried out at least in part by means of a multiple head tool (6, 16, 26, 36) with indexing and positioning (5) applied to said support film, at least one of the heads of this tool being adapted to effect an operation on one location of the film substantially at the same time as another head of that tool is effecting the same operation on another location of the film, and a step of separating the locations after this processing step which is facilitated by the formation of the scorelines or slots produced during the moulding step.

2. Method according to claim 1, **characterised in that** the processing step carried out at least in part by means of a multiple-head tool is an embedding step.

3. Method according to claim 2, **characterised in that** the multiple-head tool (16) is used for an operation of forming tracks and contacts (21, 22) in the cavity (13) which is effected by means of stamping heads (19) acting on conductive material strips (20) disposed temporarily over a series of at least two cavities.

4. Method according to any one of claims 1 to 3, **characterised in that** the multiple-head tool is used for an operation of placing microcircuits in a plurality of cavities.

5. Method according to any one of claims 1 to 4, **characterised in that** the multiple-head tool is used for an operation of depositing a dose of resin in each of the cavities.

6. Method according to any one of claims 1 to 5, **characterised in that** the multiple-head tool is used for an operation of electrical testing of the microcircuits after placing and fixing in the cavities.

7. Method according to any one of claims 1 to 6, **characterised in that** the multiple-head tool is used for an operation of personalising the cards.

8. Method according to claim 7, **characterised in that** the multiple-head tool includes a plurality of printing heads.

9. Method according to claim 7, **characterised in that** the multiple-head tool includes a plurality of punching heads.

10. Method according to any one of claims 1 to 9, **characterised in that** all the heads of the tool effect the same operation at the same time.

11. Method according to any one of claims 1 to 10, **characterised in that** the heads of the multiple-head tool have variable gaps between them corresponding to different card formats.

## Patentansprüche

1. Herstellungsverfahren für eine Mehrheit Chipkarten mit einer Länge und Breite, die denen, die durch das Format ID-000 definiert sind, entsprechen oder kleiner sind, umfassend einen Schritt zur Herstellung eines Trägerbogens (1, 11, 51, 61), der mehrere Flächen (2) aufweist, von denen jede dafür bestimmt ist, einen Kartenträger darzustellen und mit einer Vertiefung (3, 13) versehen ist, die dafür eingerichtet ist, einen integrierten Schaltkreis (9, 30) aufzunehmen, wobei dieser Schritt zur Herstellung des Trägerbogens einen Schritt zum Spritzgießen dieses Bogens mit den Vertiefungen (3) umfasst, bei dem Schlitze (42) zwischen den Flächen geformt werden und gleichzeitig mechanische Verbindungsbrücken bestehen bleiben, oder Kerben (52, 53) in der Tiefe des Bogens geformt werden, einen Schritt zum Bearbeiten des Trägerbogens, der zumindest teilweise mit einem Werkzeug mit mehreren Köpfen (6, 96, 26, 36), mit Ausrichtung und Positionierung (5), des Trägerbogens, durchgeführt wird, wobei zumindest einer der Köpfe dieses Werkzeugs dafür eingerichtet ist, einen Arbeitsschritt an einer Fläche des Bogens auszuführen, während im Wesentlichen gleichzeitig ein anderer Kopf dieses Werkzeugs denselben Arbeitsschritt an einer anderen Fläche dieses Bogens ausführt, und einen Schritt zum Trennen der Flächen nach diesem Bearbeitungsschritt, der durch die Formung der Kerben oder Schlitze, die während des Spritzgussschritts hergestellt werden, vereinfacht wird.

2. Verfahren nach Anspruch 1, **dadurch gekennzeichnet, dass** der Bearbeitungsschritt, der zumindest teilweise mit einem Mehrkopfwerkzeug ausgeführt wird, ein Einbettungsschritt ist.

3. Verfahren nach Anspruch 2, **dadurch gekennzeichnet, dass** das Mehrkopfwerkzeug (16) für einen Arbeitsschritt zum Formen von Leiterbahnen und Kontakten (21, 22) in der Vertiefung (13) durch Hineindrücken verwendet wird, der mit Pressköpfen (19) ausgeführt wird, die auf Streifen eines leitenden Materials (20) einwirken, die vorübergehend über einer Reihe von mindestens zwei Vertiefungen angeordnet sind.

4. Verfahren nach einem der Ansprüche 1 bis 3, **dadurch gekennzeichnet, dass** das Mehrkopfwerkzeug für einen Arbeitsschritt zum Anordnen von integrierten Schaltkreisen in mehrere Vertiefungen verwendet wird.

5. Verfahren nach einem der Ansprüche 1 bis 4, **dadurch gekennzeichnet, dass** das Mehrkopfwerkzeug für einen Arbeitsschritt zum Abgeben einer Harzmenge in jede der Vertiefungen verwendet wird.

6. Verfahren nach einem der Ansprüche 1 bis 5, **dadurch gekennzeichnet, dass** das Mehrkopfwerkzeug für einen Arbeitsschritt eines elektrischen Tests der integrierten Schaltkreise nach dem Anordnen und Befestigen in den Vertiefungen verwendet wird.

7. Verfahren nach einem der Ansprüche 1 bis 6, **dadurch gekennzeichnet, dass** das Mehrkopfwerkzeug für einen Arbeitsschritt zum Personalisieren der Karten verwendet wird.

8. Verfahren nach Anspruch 7, **dadurch gekennzeichnet, dass** das Mehrkopfwerkzeug eine Vielzahl von Druckköpfen aufweist.

9. Verfahren nach Anspruch 7, **dadurch gekennzeichnet, dass** das Mehrkopfwerkzeug eine Vielzahl von Stanzköpfen aufweist.

10. Verfahren nach einem der Ansprüche 1 bis 9, **dadurch gekennzeichnet, dass** sämtliche Köpfe des Werkzeugs gleichzeitig denselben Arbeitsschritt ausführen.

11. Verfahren nach einem der Ansprüche 1 bis 10, **dadurch gekennzeichnet, dass** die Köpfe des Mehrkopfwerkzeugs einstellbare Abstände aufweisen, die den verschiedenen Kartenformaten entsprechen.
